# FASCICULE DE BREVET EUROPEEN

(11) **EP 4 188 758 B1**
(45) Date de publication et mention de la délivrance du brevet: **06.05.2026**
(21) Numéro de dépôt: 21740105.8
(22) Date de dépôt: 13.07.2021
(51) Int. Cl.: B60S 1/40, B60S 1/52, B60S 1/38

(54) **BALAI D'ESSUIE-GLACE COMPORTANT DES MOYENS SÉCURISÉS DE VERROUILLAGE SUR UN BRAS D'ENTRAÎNEMENT, ET ENSEMBLE D'ESSUIE-GLACE COMPORTANT UN TEL BALAI D'ESSUIE-GLACE**
SCHEIBENWISCHER MIT SICHEREN MITTELN ZUR VERRIEGELUNG AN EINEM ANTRIEBSARM UND SCHEIBENWISCHERANORDNUNG MIT EINEM SOLCHEN SCHEIBENWISCHER
WIPER HAVING SECURE MEANS FOR LOCKING TO A DRIVE ARM, AND WIPER ASSEMBLY HAVING SUCH A WIPER

(30) Priorité: 27.07.2020 FR 2007921
(43) Date de publication de la demande: 07.06.2023
(73) Titulaire: Valeo Systèmes d'Essuyage, 78322 le Mesnil Saint Denis (FR)
(72) Inventeur: CAILLOT, Gérald, 78322 Le Mesnil Saint Denis (FR); JARASSON, Jean-Michel, 78322 Le Mesnil Saint Denis (FR); IZABEL, Vincent, 78322 Le Mesnil Saint Denis (FR)
(74) Mandataire: Valeo Visibility
(86) Numéro de dépôt international: PCT/EP2021/069539
(87) Numéro de publication internationale: WO 2022/023033

(56) Documents cités:
- WO-A1-2012/072301
- WO-A1-2012/072302
- WO-A1-2012/072748
- FR-A1- 2 981 622
- FR-A1- 3 055 862

## Description

### DOMAINE TECHNIQUE DE L'INVENTION

L'invention concerne un balai d'essuie-glace et un ensemble bras et balai d'essuie-glace comportant des moyens de sécurisation de la liaison entre le bras et le balai.

### ARRIERE PLAN TECHNIQUE DE L'INVENTION

Un véhicule automobile est classiquement équipé d'essuie-glaces, notamment pour assurer un lavage de la surface extérieure du pare-brise et éviter ainsi que la vision qu'a le conducteur de son environnement ne soit perturbé.

Un essuie-glace comprend en général un bras d'entraînement (aussi appelé bras d'essuie-glace ou porte-balai), effectuant un mouvement de va-et-vient, notamment angulaire, et un balai d'essuie-glace allongé longitudinalement qui porte une lame d'essuyage ou lame racleuse réalisée en une matière élastique telle que du caoutchouc ou un matériau élastomère.

La lame d'essuyage frotte contre la surface extérieure du pare-brise et évacue l'eau en l'amenant en dehors du champ de vision du conducteur.

Dans une version classique, le balai d'essuie-glace est réalisé sous la forme d'étriers articulés qui tiennent la lame racleuse d'essuyage en plusieurs endroits discrets répartis longitudinalement en lui conférant un cintrage lui permettant d'épouser l'éventuelle courbure ou galbe du pare-brise.

Dans une version plus récente dénommée "flat blade" (pour "lame plate"), le balai d'essuie-glace est réalisé sous la forme d'un ensemble semi-rigide qui maintient la lame d'essuyage sur toute sa longueur grâce à une ou des vertèbres de cintrage permettant d'appliquer le balai et la lame d'essuyage sur le pare-brise sans avoir à utiliser d'étriers.

Dans les deux conceptions, le balai d'essuie-glace est relié au bras d'entraînement par un système de connexion comportant un connecteur et un adaptateur complémentaires.

Le connecteur est une pièce qui est solidarisée au balai d'essuie-glace et qui est en général fixée directement sur la lame d'essuyage ou sur la "flat blade" ou lame plate, tandis que l'adaptateur est solidaire du bras d'entraînement.

L'adaptateur est une pièce intermédiaire qui permet la liaison et la fixation du connecteur sur le bras d'entraînement. Il est en général conformé pour être engagé dans une tête ou partie terminale en forme de chape et à section transversale en U renversé du bras d'entraînement.

Chacun de ces deux composants (connecteur et adaptateur) comporte des moyens d'articulation conçus pour coopérer avec des moyens complémentaires de l'autre composant, pour définir au moins un axe transversal d'articulation des deux composants l'un par rapport à l'autre, qui est aussi l'axe d'articulation du balai d'essuie-glace par rapport au bras d'entraînement.

Selon une conception connue, l'un des composants, tel que le connecteur, comprend en général un axe physique sensiblement cylindrique qui définit l'axe d'articulation et qui est reçu dans un logement de forme complémentaire de l'autre composant.

L'adaptateur comporte en général un corps allongé qui est conformé pour être engagé dans la partie terminale d'extrémité libre avant du bras d'entraînement de façon que ce corps s'étende au moins en partie entre deux parois latérales sensiblement parallèles de cette partie terminale.

Un adaptateur permet d'associer un balai d'essuie-glace à un type particulier de partie terminale. Dans le cas des parties terminales précitées à section en U renversé, il en existe plusieurs variétés.

On connaît aussi un bras d'entrainement dont la tête ou partie terminale d'extrémité avant est montée coulissante en translation longitudinale longitudinalement entre une première position avant ou position avancée dite de travail ou d'utilisation de l'essuie-glace dans laquelle elle est montée et verrouillée sur l'adaptateur, et une seconde position arrière ou position reculée dite de maintenance ou de service dans laquelle elle est déverrouillée en vue de permettre le démontage ou séparation du bras d'essuie-glace, par exemple en vue de son remplacement.

Différents types d'adaptateurs sont connus, et parmi ceux-ci, certains comportent, en bout d'une languette flexible, un bouton de verrouillage apte à être reçu dans une ouverture de taille correspondante formée dans la partie terminale d'extrémité libre du bras d'entraînement.

Lorsque le bras d'entraînement est fixé à l'adaptateur, la languette flexible est classiquement alignée le long d'une direction longitudinale parallèlement à laquelle s'étend principalement le bras d'entraînement.

Le bouton de verrouillage, après insertion de l'adaptateur dans la partie terminale d'extrémité libre du bras d'entraînement, occupe une position de verrouillage dans laquelle il est engagé dans l'ouverture.

Cette fixation par coopération du bouton de verrouillage et de l'ouverture participe au positionnement et à la fixation fiable de l'adaptateur par rapport au bras d'entraînement, notamment dans les deux sens selon la direction longitudinale.

Pour désengager l'adaptateur du bras d'entraînement, l'utilisateur doit appuyer sur le bouton de verrouillage pour l'enfoncer dans l'ouverture pour que le bouton de verrouillage atteigne une position escamotée de libération pour permettre le coulissement d'avant en arrière selon la direction longitudinale du bras d'entraînement.

En utilisation, lorsque la lame d'essuyage est en contact avec la surface extérieure de la vitre à essuyer et que le balai d'essuie-glace est entraîné en balayage alterné par le bras d'entraînement, l'adaptateur pivote dans les deux sens autour de l'axe d'articulation par rapport au connecteur dans une plage de positions angulaires qui est par exemple comprise entre plus ou moins dix degré d'angle (+/- 10°) par rapport à une position « zéro » de référence.

En vue de la maintenance et par exemple pour le remplacement du balai d'essuie-glace, il est connu de soulever le bras d'entrainement du balai d'essuie-glace par rapport à la surface de la vitre à essuyer en position de maintenance, en effectuant une rotation d'environ 90°, puis de faire pivoter le balai d'essuie-glace jusqu'à une position angulaire, appartenant à une plage de positions angulaires de maintenance adjacentes à la plage de positions angulaires de travail.

Par rapport à la position angulaire zéro de référence, la plage angulaire de maintenance est par exemple supérieure à +10° et inférieure à par exemple +20°.

Dans une telle position de maintenance ou de service, l'utilisateur peut enfoncer le bouton de verrouillage et désolidariser le balai d'essuie-glace de la partie terminale du bras d'entraînement.

En utilisation, il est particulièrement important, pour la sécurité de fonctionnement, qu'il ne se produise pas de désolidarisation de l'adaptateur par rapport à la partie terminale du bras d'entrainement.

Toutefois, par exemple du fait de variations dimensionnelles des composants et de la flexibilité des pièces en matière plastique, on a pu constater des désolidarisations accidentelles.

L'invention vise à proposer une solution à ce problème.

A titre non limitatif, l'invention trouve notamment à s'appliquer lorsque le balai d'essuie-glace comporte un ensemble de raccordement hydraulique et / ou électrique du balai d'essuie-glace porté par le connecteur.

En effet, les essuie-glaces sont peuvent être équipés de dispositifs d'amenée d'un liquide lave-vitre qui est acheminé depuis un réservoir situé sur le véhicule et qui est pulvérisé en direction du pare-brise par des gicleurs situés sur l'essuie-glace lui-même pour une meilleure distribution du liquide. Dans le cas de buses placées sur les balais, le liquide lave-vitre est acheminé, avant d'être réparti entre elles, par une ou plusieurs canalisations qui sont fixées sur le bras d'entraînement de l'essuie-glace et qui sont raccordées au système de distribution du balai d'essuie-glace au niveau du connecteur. Le connecteur comporte ainsi des orifices aptes à recevoir, par une liaison étanche, les embouts desdites canalisations.

On peut aussi trouver des dispositifs de chauffage de l'essuie-glace pour dégeler le balai en cas de grand froid et éviter qu'il ne colle au pare-brise sous l'action du gel.

Ces dispositifs, qui sont plus spécialement adaptés à des balais du type « flat blade », comportent généralement un dispositif chauffant intégré dans l'ensemble porteur de la lame d'essuyage. Ils nécessitent eux aussi un dispositif de raccordement électrique, placé au niveau du connecteur, pour transmettre au dispositif chauffant le courant électrique provenant du véhicule.

Tous ces éléments doivent être raccordés lorsqu'un utilisateur doit changer ses balais d'essuie-glace.

Pour simplifier les opérations à conduire lors de ce remplacement, il a ainsi été proposé un ensemble de raccordement hydraulique et / ou électrique à un connecteur de balai d'essuie-glace qui soit simple à installer, même par un utilisateur peu averti.

Une telle conception d'un ensemble de raccordement ainsi que certains perfectionnements sont notamment illustrés dans les documents WO-A1-2012/072748, FR-A1-2.962.094, FR-A1-3034385 et FR-A1-3055862.

### BREF RESUME DE L'INVENTION

L'invention propose un balai d'essuie-glace, comprenant :
- un connecteur de support d'au moins une lame d'essuyage ;
- un adaptateur apte à recevoir une partie terminale d'extrémité avant d'un bras d'entraînement du balai d'essuie-glace qui :
   -- est monté articulé par rapport au connecteur, autour d'un axe d'articulation, entre une position de travail et une position de maintenance ;
   -- comporte un organe de verrouillage de ladite partie terminale sur l'adaptateur, qui est monté mobile entre une position de verrouillage et une position escamotée de libération de ladite partie terminale ;
   le balai d'essuie-glace comportant un organe de blocage de l'organe de verrouillage en position de verrouillage lorsque l'adaptateur est en position de travail, et de libération de l'organe de verrouillage lorsque l'adaptateur est en position de maintenance.

Selon l'invention:
- l'organe de verrouillage est monté mobile par rapport à l'adaptateur, selon une direction orthogonale audit axe d'articulation, entre la position de verrouillage et la position escamotée de libération ; et
- l'organe de blocage comporte un organe de butée, porté par le connecteur ou par l'organe de verrouillage, qui s'étend en regard d'une surface de butée, portée par l'organe de verrouillage ou par le connecteur respectivement ;
- l'organe de butée est un organe en saillie porté par le connecteur ou par l'organe de verrouillage, qui s'étend en regard d'une surface de butée, portée par l'organe de verrouillage ou par le connecteur respectivement ;
- le balai d'essuie-glace comporte un ensemble de raccordement hydraulique et / ou électrique du balai d'essuie-glace qui est porté par le connecteur, et l'organe de butée est porté par l'ensemble de raccordement ou par l'organe de verrouillage et s'étend en regard d'une surface de butée, portée par l'organe de verrouillage ou par l'ensemble de raccordement respectivement ;
Selon d'autres caractéristiques du balai d'essuie-glace :
- l'ensemble de raccordement hydraulique et / ou électrique comporte une pièce avant solidaire du connecteur, et une pièce arrière démontable qui est montée mobile longitudinalement par rapport à ladite pièce avant, selon une direction orthogonale audit axe d'articulation, entre une position avant raccordée qu'elle occupe lorsque ladite partie terminale est en position de travail, et une position arrière débranchée qu'elle occupe lorsque ladite partie terminale est en position de maintenance ;
- l'organe de butée est un doigt de butée qui est porté par ladite pièce arrière et qui s'étend en regard d'une surface de butée portée par l'organe de verrouillage ;
- l'organe de verrouillage solidaire de l'adaptateur comprend une languette flexible au bout de laquelle est ménagée un bouton de verrouillage configuré pour se loger dans une fenêtre ménagée dans la partie terminale.

L'invention propose aussi un ensemble comportant une partie terminale d'extrémité avant d'un bras d'entraînement et un balai d'essuie-glace tel que décrit précédemment dont la pièce arrière démontable de l'ensemble de raccordement hydraulique et / ou électrique est reliée de manière débrayable à un corps de guidage porté par ladite partie terminale de manière à en être solidaire lorsque l'adaptateur est en position de maintenance et à en être désolidarisée lorsque l'adaptateur est en position de travail.

Cet ensemble comporte en outre un sous-ensemble comportant ladite partie terminale, ledit corps de guidage et ladite pièce arrière démontable, qui est apte à être séparé du balai d'essuie-glace comportant le connecteur, l'adaptateur et ladite pièce avant de l'ensemble de raccordement hydraulique et / ou électrique lorsque l'adaptateur est en position de maintenance et que l'organe de verrouillage est en position escamotée de libération.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue en perspective qui représente un ensemble comportant un tronçon central d'un bras d'essuie-glace selon l'invention qui est illustré en association avec la partie terminale d'extrémité avant d'un bras d'entrainement du balai d'essuie-glace ;
- la figure 2 est une vue latérale de l'ensemble de la figure 1 qui est illustré sans la partie terminale du bras d'entrainement et sans la lame d'essuyage, dans une position de travail de l'adaptateur par rapport au connecteur, et dans une position de verrouillage du bouton de verrouillage ;
- la figure 3 est une vue en coupe par un plan vertical et longitudinal médian des composants illustrés à la figure 2 ;
- la figure 4 est une vue similaire à celle de la figure 3 sur laquelle le bouton de verrouillage est représenté dans une position de verrouillage par l'organe de blocage selon l'invention ;
- la figure 5 est une vue en perspective de l'ensemble des composants illustrés à la figure 2, dans une position de maintenance de l'adaptateur par rapport au connecteur, et dans une position de verrouillage du bouton de verrouillage ;
- la figure 6 est une vue latérale de l'ensemble des composants de la figure 5 ;
- la figure 7 est une vue en coupe par un plan vertical et longitudinal médian des composants illustrés à la figure 6 ;
- la figure 8 est une vue similaire à celle de la figure 7 sur laquelle le bouton de verrouillage est représenté dans une position escamotée de libération de la partie terminale ;
- la figure 9 est une vue latérale qui illustre les composants de l'ensemble de raccordement hydraulique et électrique qui sont illustrés en position raccordée de leurs pièces avant et arrière ;
- la figure 10 est une vue en perspective de la pièce arrière de raccordement hydraulique de l'ensemble illustré à la figure 10 ; et
- la figure 11 est une vue en perspective de l'élément de guidage porté par la partie terminale d'extrémité avant du bras d'entrainement.

### DESCRIPTION DETAILLEE DES FIGURES

Dans la suite de la description, des éléments présentant une structure identique ou des fonctions analogues seront désignés par des mêmes références.

Dans la suite de la description et dans les revendications, on adoptera de manière non limitative des orientations longitudinale, verticale, transversale, latérale, avant, arrière indiquées par le trièdre "L,V,T" des figures. On définit aussi un plan horizontal qui s'étend longitudinalement et transversalement.

L'orientation verticale est définie sans référence à la gravité terrestre.

L'axe longitudinal L est par définition orienté d'arrière en avant.

L'axe transversal T est par définition orienté de la gauche vers la droite.

En référence à l'orientation verticale définie par l'axe V, on utilisera les termes inférieur, supérieur, bas, haut etc.

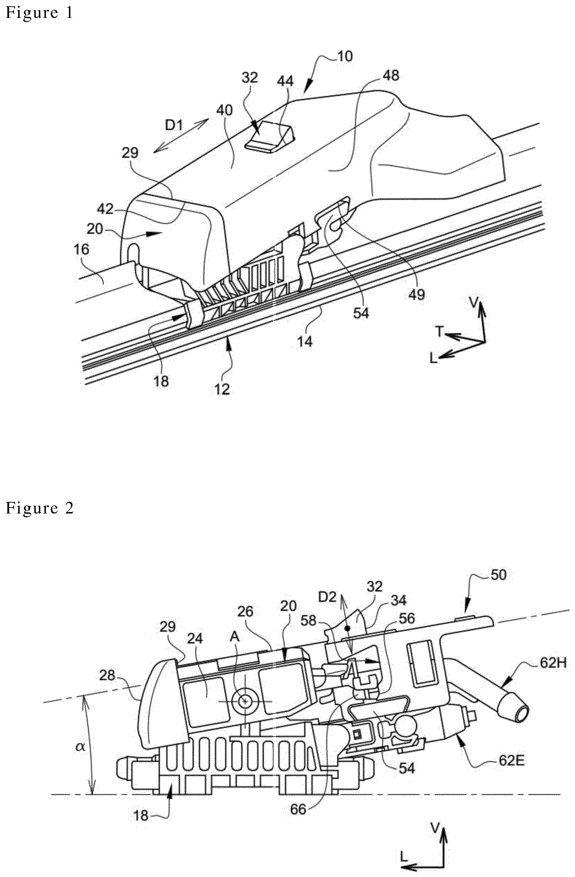

On a représenté à la figure 1, une partie terminale d'extrémité avant 10 en forme générale de chape en « U » renversé qui appartient à un bras d'entraînement (non représenté) d'un essuie-glace.

La partie terminale 10 s'étend globalement selon une direction longitudinale D1 et elle délimite un logement interne ouvert longitudinalement vers l'avant qui est conçu pour recevoir un adaptateur d'un balai d'essuie-glace 12 dont un tronçon central est illustré à la figure 1 en position assemblée et montée dans la partie terminale 10.

Le balai d'essuie-glace 12 comporte, de manière connue, une lame d'essuyage 14 qui est associée à des moyens de rigidification et ici, à titre non limitatif, à une partie supérieure 16 en forme de déflecteur aérodynamique.

Entre deux tronçons longitudinaux du déflecteur aérodynamique 16, la partie supérieure de la lame d'essuyage et de ces moyens de renforts est solidaire d'un connecteur 18 qui est une pièce moulée en matière plastique. De manière alternative, le connecteur peut être conçu en matière métallique.

De manière connue, le connecteur 18 est associé à un adaptateur 20 complémentaire de la partie terminale 10.

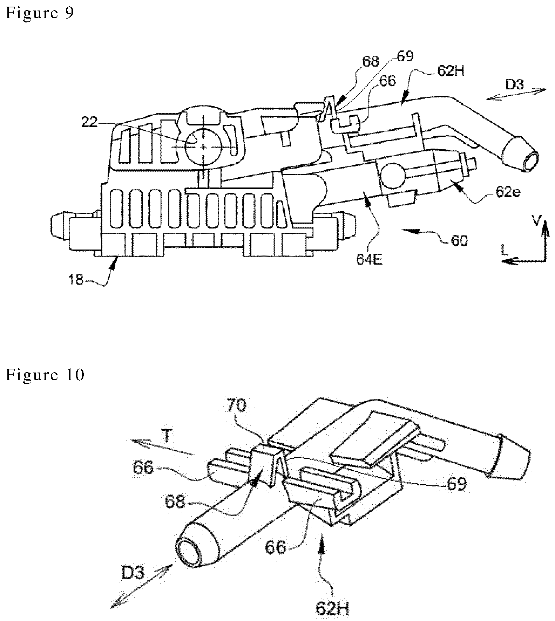

Comme on peut le voir notamment à la figure 9, le connecteur 18 comporte, à sa partie supérieure, deux tronçons transversalement opposés 22 d'un perçage axial qui sont complémentaires de deux tronçons de tige d'articulation (non visibles sur les figures) formés, de manière connue, dans des faces internes des parois latérales verticales 24 de l'adaptateur 20.

Ainsi, en position assemblée de l'adaptateur 20 sur le connecteur 18, ces deux composants sont montés articulés l'un par rapport à l'autre autour d'un axe transversal d'articulation « A » en permettant un pivotement relatif dans les deux sens de l'adaptateur 20 par rapport au connecteur 18, ce dernier étant considéré comme une référence fixe dans le cadre de la présente description.

De manière connue, l'adaptateur 20, de section en forme de « U », comporte deux parois latérales verticales 24 et une paroi supérieure horizontale 26 qui, avec une face transversale et verticale avant 28 délimite un logement interne dans lequel est notamment reçu la partie supérieure du connecteur 18.

À son extrémité longitudinale arrière, la paroi supérieure horizontale 26 se prolonge par une languette flexible 30, moulée en une seule pièce, qui est déformable élastiquement et qui, à son extrémité libre arrière, se prolonge par un organe de verrouillage correspondant à un bouton de verrouillage 32.

Le bouton de verrouillage 32 est délimité longitudinalement vers l'arrière par une face transversale et verticale avant 33 et par une face transversale et verticale arrière 34.

Le bouton de verrouillage 32 est aussi délimité verticalement vers le bas par une face inférieure sensiblement parallèle au plan dans lequel s'étend la languette flexible 30 et dans laquelle est ici formé un évidement 36 qui est délimité verticalement vers le haut par un fond plan 37 et latéralement par une face avant et une face arrière 38.

La partie terminale 10 en forme de chape comporte un dos supérieur horizontal 40 qui est délimité longitudinalement vers l'avant par un bord transversal avant 42 qui, en position assemblée et montée sur l'adaptateur 20, est en butée longitudinalement vers l'avant contre un bord transversal 29 arrière en vis-à-vis de la paroi supérieure 26 de l'adaptateur 20.

Le dos supérieur horizontal 40 comporte aussi une ouverture ou une fenêtre 44 dont le contour et les dimensions sont complémentaires de ceux du bouton de verrouillage 32 afin que, comme cela est notamment illustré aux figures 1, 3 ou 7, elle puisse recevoir le bouton de verrouillage 32. Dans une telle position, le bouton de verrouillage 32 bloque dans les deux sens - en coulissement longitudinal selon la direction D1 par rapport à la partie terminale 10 du bras d'entrainement - l'adaptateur 20 dans la partie terminale 10 du bras d'entrainement.

La partie terminale 10 en forme de chape comporte aussi deux ailes latérales opposées 48 dont chacune s'étend dans un plan longitudinal et vertical.

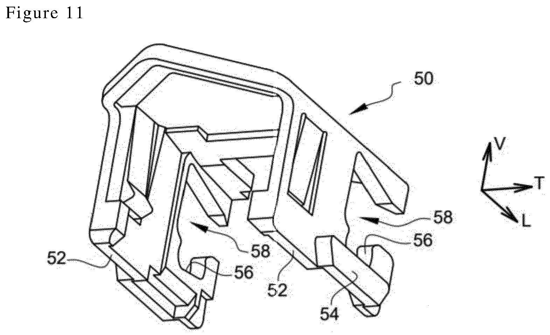

Entre les faces internes opposées de ses ailes 48, au voisinage de sa portion d'extrémité arrière, la partie terminale 10 loge intérieurement un corps de guidage 50 qui est notamment illustré en détail à la figure 11.

Le corps de guidage 50 est une pièce moulée en matière plastique, elle aussi en forme générale de chape dont les dimensions sont complémentaires des dimensions internes de la portion d'extrémité arrière de la partie terminale 10.

Le corps de guidage 50 comporte notamment deux ailes latérales opposées 52 dont chacune s'étend dans un plan longitudinal et vertical.

Le corps de guidage 50 est logé et fixé dans la partie terminale 10 notamment au moyen de deux ergots 54 dont chacun est formé au voisinage du bord inférieur d'une aile 52 et s'étend transversalement vers l'extérieur pour être reçu par emboîtement élastique dans un cran complémentaire 49 formé dans un bord inférieur d'une aile latérale associée 48 de la partie terminale 10.

Ainsi, le corps de guidage 50 est toujours solidaire de la partie terminale 10 dans ses différents mouvements et déplacements et notamment en coulissement longitudinal dans les deux sens selon la direction D1 par rapport à l'adaptateur 20 et en pivotement dans les deux sens autour de l'axe articulation A lorsque la partie terminale 10 est solidaire de l'adaptateur 20.

Dans chacune de ses ailes latérales 52, le corps de guidage 50 comporte un cran 56 qui est ouvert verticalement vers le haut dans une fenêtre 58 qui est elle-même ouverte longitudinalement vers l'avant.

De manière connue, et par exemple selon les enseignements du document WO-A1-2012/072748, le balai d'essuie-glace comporte un ensemble 60 de moyens pour le raccordement hydraulique et électrique du balai d'essuie-glace.

En position assemblée des éléments et composants de l'essuie-glace et en état d'utilisation de l'essuie-glace, cet ensemble forme un tout qui est porté par le connecteur et qui est illustré notamment à la figure 9.

Pour le raccordement hydraulique, l'ensemble comporte une pièce arrière « mâle » démontable 62H qui est raccordée à une pièce avant « femelle » 64H qui est ici intégrée au corps du connecteur, ces deux pièces étant ici conçues, à titre non limitatif, pour l'établissement d'une voie hydraulique « centrale ».

Pour le raccordement électrique, l'ensemble comporte une pièce arrière « mâle » démontable 62E qui est raccordée à une pièce avant « femelle » 64E qui est portée par le corps du connecteur 18, ces deux pièces étant ici conçues, à titre non limitatif, pour l'établissement de deux lignes électriques.

Les différentes pièces sont illustrées dans leur position relative ou état « raccordé », les pièces arrière 62H et 62E occupant une position avant par rapport au corps du connecteur 18 et aux pièces avant 64H et 64E qu'il porte.

L'ensemble est conçu pour pouvoir être débranché, selon la direction longitudinale « D3 », en entraînant simultanément longitudinalement vers l'arrière les deux pièces arrière 62H et 62E vers une position arrière débranchée (non illustrée sur les figures).

Pour ce faire, la pièce arrière de raccordement hydraulique 62H est solidaire en translation longitudinale selon D3 de la pièce arrière de raccordement électrique 62E.

En fonction de la position angulaire de la partie terminale 10 par rapport au connecteur 18, et comme cela sera expliqué par la suite, la pièce arrière de raccordement hydraulique 62H est solidaire, ou non en translation longitudinale selon D1 du corps de guidage 50 lié à la partie terminale 10.

A cet effet, et comme on peut le voir notamment à la figure 10, la pièce arrière de raccordement hydraulique 62H comporte deux tétons transversaux opposés 66 dont chacun est de contour complémentaire de celui d'un cran associé 56 du corps de guidage 50.

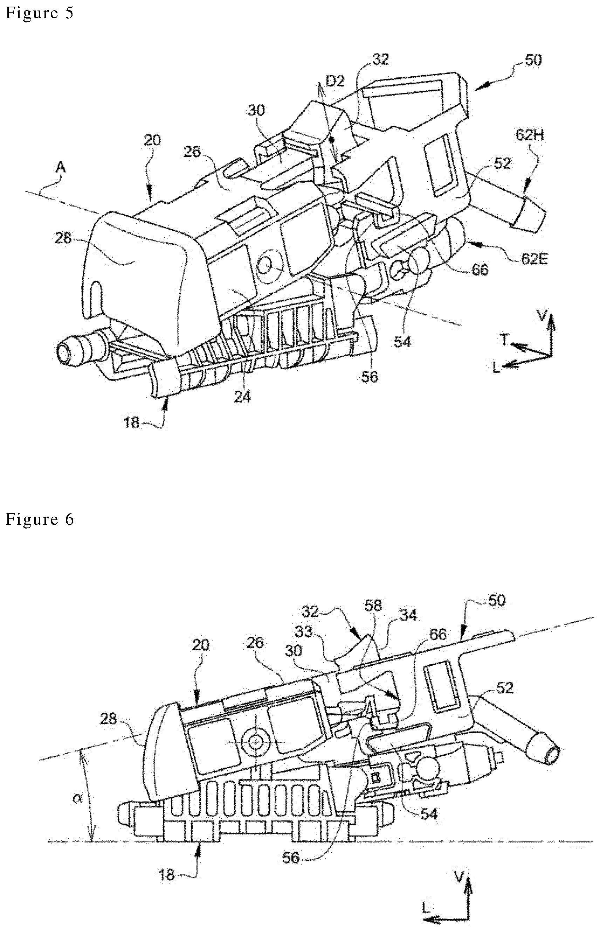

Ainsi, en fonction de la position angulaire de la partie terminale 10 par rapport au connecteur 18 et comme cela est illustré par exemple aux figures 2 et 6, chaque téton 66 peut être emboîté, ou non, dans un cran associé 56.

Conformément à l'invention, il est prévu un organe de blocage du bouton de verrouillage 32 en position de verrouillage lorsque l'adaptateur est en position de travail, et escamotée de libération du bouton de verrouillage lorsque l'adaptateur est en position angulaire de maintenance.

L'organe de blocage vise à s'opposer à un déplacement suffisant vers le bas selon la direction D2 du bouton de verrouillage afin d'empêcher qu'il puisse atteindre sa position escamotée de libération en coulissement longitudinal de la partie terminale 10.

L'organe de blocage est ici un doigt de butée 68 qui est porté par le connecteur 18.

Plus précisément, le doigt de butée 68 est ici porté par la face supérieure de la pièce arrière de raccordement hydraulique 62H et est agencé sensiblement au droit des tétons transversaux 66.

Le doigt de butée 68 est délimité verticalement vers le haut par une facette supérieure 70 et latéralement par une face latérale avant et une face latérale arrière 69.

Comme cela sera expliqué par la suite, en fonction de la position angulaire relative des composants, le doigt de butée 68 est susceptible d'être reçu ou non dans l'évidement 36 formé dans le bouton de verrouillage 32 en regard de la surface 38 qui constitue la surface de butée apte à coopérer avec la face latérale arrière 69 du doigt de butée 68. La surface de butée 38 correspond à la face latérale arrière délimitant l'évidement 36 du bouton de verrouillage.

Le fonctionnement de l'ensemble qui vient d'être décrit est le suivant.

En prenant le connecteur 18 comme référence géométrique, on définit la position angulaire de l'adaptateur 20 par rapport au connecteur 18 en fonction de la valeur de l'angle « alpha » indiqué notamment aux figures 2 et 6.

Lorsque la ligne pointillée supérieure définissant la position angulaire de l'adaptateur 20 est horizontale, c'est-à-dire parallèle à la ligne inférieure horizontale du connecteur 18, la valeur de l'angle alpha est égale à zéro.

À la figure 2, l'adaptateur 20 et la partie terminale 10 représentée à la figure 1 sont dans la position de travail correspondant par exemple à une valeur de l'angle alpha égale à environ 10°.

Dans cette position de travail, et dans chacune des positions de travail, les tétons 66 sont situés en dehors des crans 56 et se déplacent librement, globalement selon la direction D2 à l'intérieur des fenêtres 58.

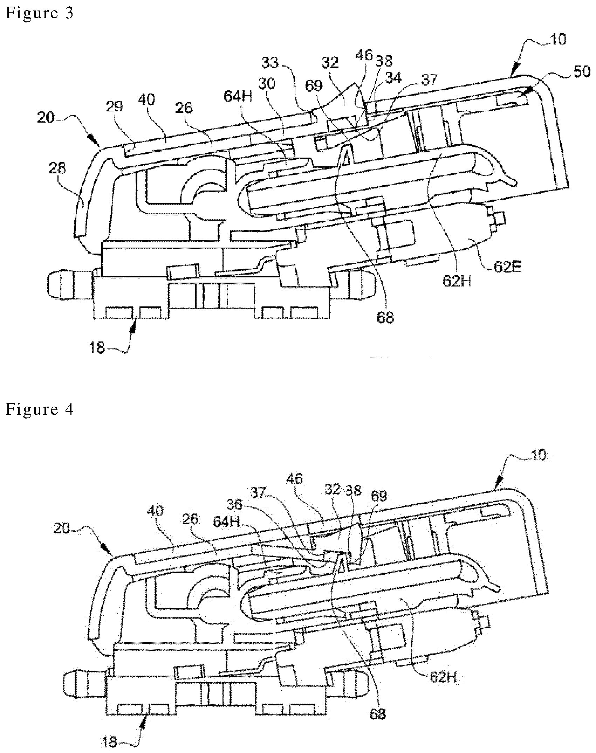

Comme on peut le voir à la figure 3, la partie terminale 10 est verrouillée sur l'adaptateur 20 par le bouton de verrouillage 32 qui est logé à l'intérieur de la fenêtre centrale 44 de la partie terminale 10, position dans laquelle il est rappelé élastiquement par la languette 30.

Pour provoquer un déverrouillage et une libération de la partie terminale 10, il faut normalement appliquer au bouton de verrouillage 32 un effort de déverrouillage selon la direction D2, de haut en bas afin de l'extraire complètement de la fenêtre centrale 44 de la partie terminale 10.

Comme on peut la voir à la figure 4, et grâce à la conception selon l'invention, tant que l'adaptateur 20 est dans une position de travail par rapport au connecteur 18, toute action sur le bouton de verrouillage 32 en vue de provoquer un éventuel déverrouillage aboutit à une venue en butée de la surface de butée 38 du bouton de verrouillage 32, correspondant à la face latérale arrière délimitant l'évidement 36 du bouton de verrouillage, contre la face latérale arrière 69 du doigt de verrouillage 68 en empêchant ainsi tout déverrouillage suffisant du bouton de verrouillage 32 est en s'opposant ainsi à toute désolidarisation accidentelle du balai d'essuie-glace 12 par rapport à la partie terminale 10 lorsque le balai d'essuie-glace 12 est dans une position de travail.

À la figure 6, l'adaptateur 20 et la partie terminale 10 représentée à la figure 1 sont en position de service ou de maintenance dans laquelle la valeur de l'angle alpha est par exemple égale à environ 14,5 °.

Dans cette position relative qui est illustrée notamment aux figures 6 à 8, les tétons 66 sont chacun engagés respectivement dans un cran associé 56 de corps de guidage 50 qui est solidaire de la partie terminale 10.

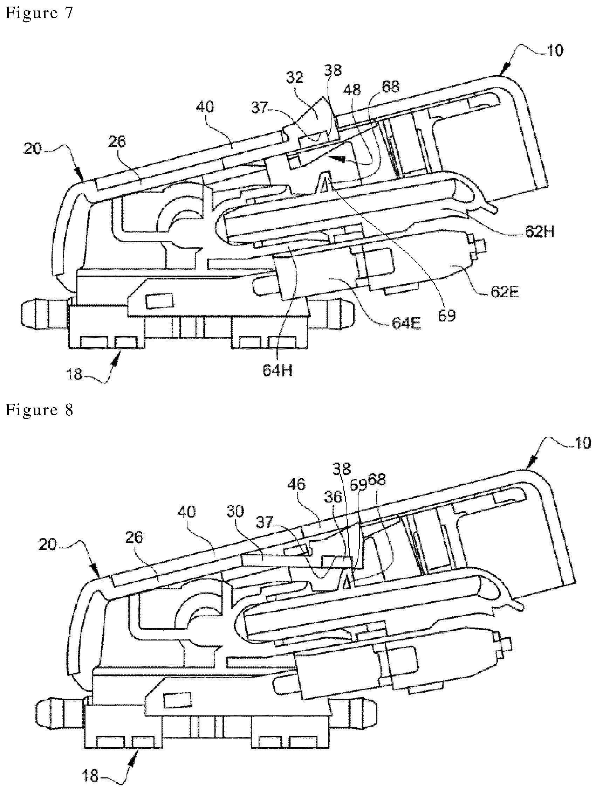

De plus, il est alors possible de libérer la partie terminale 10 par rapport au balai d'essuie-glace 12, et plus particulièrement par rapport à l'adaptateur 20, en agissant sur le bouton de verrouillage 32 pour provoquer son échappement hors de la fenêtre centrale 44 de la partie terminale 10 comme cela est illustré aux figures 7 et 8, dans la mesure où, dans une telle position de maintenance correspondant à une valeur de l'angle alpha supérieure à 10° et notamment supérieur à 14,5°, le doigt de butée 68 ne vient jamais coopérer avec la surface de butée en vis-à-vis 38.

Il est alors ainsi possible de désolidariser la partie terminale 10 de l'adaptateur 20 en la faisant coulisser longitudinalement d'avant en arrière selon la direction D1 indiquée à la figure 1.

Du fait à la présence des tétons 66 dans les crans 56, tout effort longitudinal appliqué au balai d'essuie-glace 12 entraîne simultanément le corps de guidage 50 qui entraîne lui-même en translation longitudinale vers l'arrière la pièce arrière de raccordement hydraulique 62H qui entraîne elle-même simultanément la pièce arrière de raccordement hydraulique 62E.

Ainsi, en position de maintenance ou de service il est par exemple possible de remplacer le balai d'essuie-glace 12 par un nouveau balai d'essuie-glace en ayant automatiquement débranché les pièces arrière de raccordement hydraulique 62H et électriques 62E des pièces de raccordement complémentaires avant 64H et 64E.

De manière connue, les pièces arrière de raccordement 62H et 62E restent portées par la partie terminale 10 est dans une position d'alignement telle que lors de la mise en place et de l'assemblage d'un nouveau balai d'essuie-glace, leur raccordement avec les pièces avant complémentaires de raccordement 64H et 64E s'effectuera automatiquement et de manière fiable.

## Revendications

1. Balai d'essuie-glace (12), comprenant :
- un connecteur (18) de support d'au moins une lame d'essuyage (14) ;
- un adaptateur (20) apte à recevoir une partie terminale (10) d'extrémité avant d'un bras d'entraînement du balai d'essuie-glace (12) qui :
-- est monté articulé par rapport au connecteur (18), autour d'un axe (A) d'articulation, entre une position de travail et une position de maintenance ;
-- comporte un organe (32) de verrouillage de ladite partie terminale (10) sur l'adaptateur (20), qui est monté mobile entre une position de verrouillage et une position escamotée de libération de ladite partie terminale (10) ;
- le balai d'essuie-glace (12) comportant un organe (68, 38) de blocage de l'organe (32) de verrouillage en position de verrouillage lorsque l'adaptateur (20) est en position de travail, et de libération de l'organe (32) de verrouillage lorsque l'adaptateur (20) est en position de maintenance ;
- l'organe (32) de verrouillage étant monté mobile par rapport à l'adaptateur (20), selon une direction (D2) orthogonale audit axe (A) d'articulation, entre la position de verrouillage et la position escamotée de libération ;
- l'organe de blocage comportant un organe de butée (68), porté par le connecteur (18) ou par l'organe (32) de verrouillage, qui s'étend en regard d'une surface de butée (38), portée par l'organe (32) de verrouillage ou par le connecteur (18) respectivement, **caractérisé en ce que**
- le balai d'essuie-glace comporte un ensemble (60) de raccordement hydraulique et / ou électrique du balai d'essuie-glace (12) qui est porté par le connecteur (18) et **en ce que**
- l'organe de butée (68) est porté par l'ensemble (60) de raccordement ou par l'organe (32) de verrouillage et s'étend en regard d'une surface de butée (38), portée par l'organe (32) de verrouillage ou par l'ensemble (60) de raccordement respectivement.

2. Balai d'essuie-glace (12) selon la revendication 1, **caractérisé en ce que** l'ensemble (60) de raccordement hydraulique et / ou électrique comporte une pièce avant (64H, 64E) solidaire du connecteur (18), et une pièce arrière démontable (62H, 62E) qui est montée mobile longitudinalement par rapport à ladite pièce avant (64H, 64E), selon une direction (D3) orthogonale audit axe (A) d'articulation, entre une position avant raccordée qu'elle occupe lorsque ladite partie terminale (10) est dans sa position de travail, et une position arrière débranchée qu'elle occupe lorsque ladite partie terminale (10) est dans sa position de maintenance.

3. Balai d'essuie-glace (12) selon la revendication 2, **caractérisé en ce que** l'organe de butée est un doigt de butée (68) qui est porté par ladite pièce arrière (62H) et qui s'étend en regard d'une surface de butée (38) portée par l'organe de verrouillage (32).

4. Balai d'essuie-glace (12) selon l'une quelconque des revendications 1 à 3, **caractérisé en ce que** l' organe de verrouillage (32) solidaire de l'adaptateur (20) comprend une languette flexible (30) au bout de laquelle est ménagée un bouton de verrouillage configuré pour se loger dans une fenêtre (44) ménagée dans la partie terminale.

5. Ensemble comportant une partie terminale (10) d'extrémité avant d'un bras d'entraînement et un balai d'essuie-glace selon la revendication 2, **caractérisé en ce que** la pièce arrière démontable (62H, 62E) de l'ensemble (60) de raccordement hydraulique et / ou électrique est reliée de manière débrayable à un corps de guidage (50) porté par ladite partie terminale (10) de manière à en être solidaire lorsque l'adaptateur (20) est en position de maintenance et à en être désolidarisée lorsque l'adaptateur (20) est en position de travail.

6. Ensemble selon la revendication 5, **caractérisé en ce qu'**il comporte un sous-ensemble comportant ladite partie terminale (10), ledit corps de guidage (50) et ladite pièce arrière démontable (62H, 62E), qui est apte à être séparé du balai d'essuie-glace comportant le connecteur (18), l'adaptateur (20) et ladite pièce avant (64H, 64E) de l'ensemble (60) de raccordement hydraulique et / ou électrique lorsque l'adaptateur (20) est en position de maintenance et que l'organe (32) de verrouillage est en position escamotée de libération.

## Patentansprüche

1. Wischerblatt (12), umfassend:
- einen Verbinder (18) zur Halterung mindestens einer Wischlippe (14);
- einen Adapter (20), der geeignet ist, einen vorderen Endteil (10) eines Antriebsarms des Wischerblatts (12) aufzunehmen, der:
-- in Bezug auf den Verbinder (18) um eine Gelenkachse (A) zwischen einer Arbeitsposition und einer Wartungsposition schwenkbar montiert ist;
-- ein Verriegelungselement (32) des besagten Endteils (10) am Adapter (20) aufweist, das zwischen einer Verriegelungsposition und einer zurückgezogenen Freigabeposition des besagten Endteils (10) beweglich montiert ist;
- wobei das Wischerblatt (12) ein Blockierelement (68, 38) des Verriegelungselements (32) in der Verriegelungsposition aufweist, wenn der Adapter (20) in der Arbeitsposition ist, und zur Freigabe des Verriegelungselements (32), wenn der Adapter (20) in der Wartungsposition ist;
- wobei das Verriegelungselement (32) in Bezug auf den Adapter (20) in einer Richtung (D2) senkrecht zur besagten Gelenkachse (A) zwischen der Verriegelungsposition und der zurückgezogenen Freigabeposition beweglich montiert ist;
- wobei das Blockierelement ein Anschlagelement (68) aufweist, das vom Verbinder (18) oder vom Verriegelungselement (32) getragen wird und sich gegenüber einer Anschlagfläche (38) erstreckt, die vom Verriegelungselement (32) bzw. vom Verbinder (18) getragen wird, **dadurch gekennzeichnet, dass**
- das Wischerblatt eine hydraulische und/oder elektrische Verbindungsanordnung (60) des Wischerblatts (12) aufweist, die vom Verbinder (18) getragen wird, und dass
- das Anschlagelement (68) von der Verbindungsanordnung (60) oder vom Verriegelungselement (32) getragen wird und sich gegenüber einer Anschlagfläche (38) erstreckt, die vom Verriegelungselement (32) bzw. von der Verbindungsanordnung (60) getragen wird.

2. Wischerblatt (12) nach Anspruch 1, **dadurch gekennzeichnet, dass** die hydraulische und/oder elektrische Verbindungsanordnung (60) ein vorderes Teil (64H, 64E) aufweist, das fest mit dem Verbinder (18) verbunden ist, und ein abnehmbares hinteres Teil (62H, 62E), das in Längsrichtung in Bezug auf das besagte vordere Teil (64H, 64E) in einer Richtung (D3) senkrecht zur besagten Gelenkachse (A) beweglich montiert ist, zwischen einer vorderen verbundenen Position, die es einnimmt, wenn der besagte Endteil (10) in seiner Arbeitsposition ist, und einer hinteren getrennten Position, die es einnimmt, wenn der besagte Endteil (10) in seiner Wartungsposition ist.

3. Wischerblatt (12) nach Anspruch 2, **dadurch gekennzeichnet, dass** das Anschlagelement ein Anschlagfinger (68) ist, der von dem besagten hinteren Teil (62H) getragen wird und sich gegenüber einer Anschlagfläche (38) erstreckt, die vom Verriegelungselement (32) getragen wird.

4. Wischerblatt (12) nach einem der Ansprüche 1 bis 3, **dadurch gekennzeichnet, dass** das mit dem Adapter (20) fest verbundene Verriegelungselement (32) eine flexible Lasche (30) umfasst, an deren Ende ein Verriegelungsknopf ausgebildet ist, der so konfiguriert ist, dass er in ein im Endteil ausgebildetes Fenster (44) passt.

5. Anordnung, die einen vorderen Endteil (10) eines Antriebsarms und ein Wischerblatt nach Anspruch 2 umfasst, **dadurch gekennzeichnet, dass** das abnehmbare hintere Teil (62H, 62E) der hydraulischen und/oder elektrischen Verbindungsanordnung (60) lösbar mit einem Führungskörper (50) verbunden ist, der von dem besagten Endteil (10) getragen wird, um damit fest verbunden zu sein, wenn der Adapter (20) in der Wartungsposition ist, und davon gelöst zu sein, wenn der Adapter (20) in der Arbeitsposition ist.

6. Anordnung nach Anspruch 5, **dadurch gekennzeichnet, dass** sie eine Unteranordnung umfasst, die den besagten Endteil (10), den besagten Führungskörper (50) und das besagte abnehmbare hintere Teil (62H, 62E) umfasst, die geeignet ist, vom Wischerblatt, das den Verbinder (18), den Adapter (20) und das besagte vordere Teil (64H, 64E) der hydraulischen und/oder elektrischen Verbindungsanordnung (60) umfasst, getrennt zu werden, wenn der Adapter (20) in der Wartungsposition ist und das Verriegelungselement (32) in der zurückgezogenen Freigabeposition ist.

## Claims

1. Wiper blade (12), comprising:
- a connector (18) supporting at least one blade rubber (14);
- an adapter (20) capable of receiving a front end terminal part (10) of a drive arm of the wiper blade (12) which:
-- is mounted articulated relative to the connector (18), around an articulation axis (A), between a working position and a maintenance position;
-- includes a locking member (32) of said terminal part (10) on the adapter (20), which is mounted movable between a locking position and a retracted position for releasing said terminal part (10);
- the wiper blade (12) comprising a blocking member (68, 38) for blocking the locking member (32) in the locking position when the adapter (20) is in the working position, and for releasing the locking member (32) when the adapter (20) is in the maintenance position;
- the locking member (32) being mounted movable relative to the adapter (20), in a direction (D2) orthogonal to said articulation axis (A), between the locking position and the retracted position;
- the blocking member comprising a stop member (68), carried by the connector (18) or by the locking member (32), which extends opposite a stop surface (38), carried by the locking member (32) or by the connector (18) respectively, **characterized in that**
- the wiper blade comprises a hydraulic and/or electrical connection assembly (60) of the wiper blade (12) which is carried by the connector (18) and **in that**
- the stop member (68) is carried by the connection assembly (60) or by the locking member (32) and extends opposite a stop surface (38), carried by the locking member (32) or by the connection assembly (60) respectively.

2. Wiper blade (12) according to claim 1, **characterized in that** the hydraulic and/or electrical connection assembly (60) comprises a front piece (64H, 64E) integral with the connector (18), and a removable rear piece (62H, 62E) which is mounted longitudinally movable relative to said front piece (64H, 64E), in a direction (D3) orthogonal to said articulation axis (A), between a connected front position which it occupies when said terminal part (10) is in its working position, and a disconnected rear position which it occupies when said terminal part (10) is in its maintenance position.

3. Wiper blade (12) according to claim 2, **characterized in that** the stop member is a stop finger (68) which is carried by said rear piece (62H) and which extends opposite a stop surface (38) carried by the locking member (32).

4. Wiper blade (12) according to any one of claims 1 to 3, **characterized in that** the locking member (32) integral with the adapter (20) comprises a flexible tab (30) at the end of which is provided a locking button configured to fit into a window (44) provided in the terminal part.

5. Assembly comprising a front end terminal part (10) of a drive arm and a wiper blade according to claim 2, **characterized in that** the removable rear piece (62H, 62E) of the hydraulic and/or electrical connection assembly (60) is releasably connected to a guide body (50) carried by said terminal part (10) so as to be integral with it when the adapter (20) is in the maintenance position and to be separated from it when the adapter (20) is in the working position.

6. Assembly according to claim 5, **characterized in that** it comprises a sub-assembly comprising said terminal part (10), said guide body (50) and said removable rear piece (62H, 62E), which is capable of being separated from the wiper blade comprising the connector (18), the adapter (20) and said front piece (64H, 64E) of the hydraulic and/or electrical connection assembly (60) when the adapter (20) is in the maintenance position and the locking member (32) is in the retracted release position.
